# EUROPEAN PATENT SPECIFICATION

(11) **EP 0 422 524 B1**
(45) Date of publication and mention of the grant of the patent: **03.01.1996**
(21) Application number: 90119163.5
(22) Date of filing: 05.10.1990
(51) Int. Cl.: B23D 33/00

(54) **Angle shearing machine particularly for cutting metal plates into pieces of different sizes**
Winkelschermaschine speziell zum Schneiden von Metallplatten in Stücke von verschiedener Grösse
Machine de cisaille à chantourner coudée pour couper des plaques de métaux de différents formats

(30) Priority: 11.10.1989 IT 8566089; 11.10.1989 IT 8566189
(43) Date of publication of application: 17.04.1991
(73) Proprietor: FIR S.r.L., I-36010 Zane'(Vicenza)) (IT)
(72) Inventor: Ronda, Giovanni, I-36016 Thiene (Vicenza) (IT)
(74) Representative: Forattini, Amelia

(56) References cited:
- DE-A- 3 544 899
- DE-C- 421 669
- SOVIET INVENTIONS ILLUSTRA- TED, P section, week 8624, July 27, 1986 DERWENT PUBLICATIONS LTD., London, P 54 * SU-1191-207 (HARDWARE IND RES)
- PATENT ABSTRACTS OF JAPAN, unexamined applications, M section, vol. 10, no. 196, July 10, 1986 THE PATENT OFFICE JAPANESE GOVERNMENT page 29 M 497 *Kokai-no. 61 38 816 (SUMITOMO METAL IND LTD)

## Description

The present invention relates to an angle shearing machine particularly for cutting metal plates into pieces of different sizes, of the type which comprises a supporting structure, having a longitudinal front compartment for putting into place a plate to be cut, and a vertically oscillating cutting blade above said compartment, wherein said blade is composed of a transverse portion and of a longitudinal portion which substantially form a right angle between them and are suitable for interacting selectively with the plate to be cut in order to perform a transverse cut during a first part of the descent stroke and a longitudinal cut during a second part of said stroke.

From SOVIET INVENTIONS ILLUSTRATED in SU 1191-207 a slitter for cutting strips is known which is fitted with a strip separator formed by a pair of adjustable deflecting guide plates. Such an arrangement provides shorter adjustment and resetting time but is conceived uniquely for straight slitting devices.

Angle shearing machines, differently from straight ones, allow to perform cuts which are arranged at right angles to obtain pieces of plate of the required dimensions in a single stroke. By means of this type of shearing machine it is therefore possible to reduce production times and minimize machining waste.

The field of application of the present invention relates to improved shearing machines which substantially allow to perform, with one of the portions of the blade, cuts which are longer than its extension. By giving the blade a stroke of a preset length, smaller than the total one, it is in fact possible to use only one of the portions of said blade to perform a first cut, for example in a transverse direction. By means of successive partial strokes of the blade it is possible to perform further aligned transverse cuts before performing a final longitudinal cutting of the plate by imparting a complete stroke to said blade. With this system it is therefore possible to perform, with one of the portions of the blade, cuts of any length having an extent which is considerably greater than the length of said portion and is equal to multiples thereof.

Angle shearing machines of the above described type which allow to cut plates of considerable dimensions, for example with a maximum width of approximately 1500 mm and a maximum length of approximately 4000 mm, are known. In shearing machines of this type, the cutting blades can have considerable dimensions and are supported by a substantially post-and-lintel structure which is suitable for allowing the movement of the blade-holder mandrel parallel to the plane of the plate, whereas said plate is arranged on a support table. As an alternative, the blade can be kept fixed while the plate is moved by means of appropriate moving platforms or manipulators.

Said known shearing machines perform their task satisfactorily but have some acknowledged disadvantages, such as a high cost and a relative slowness due to the considerable masses involved in the movement of the supporting structure or of the cutting blades.

In another known type of angular shearing machine, the two segments or portions of the L-shaped blade are selectively movable independently of one another and with respect to the support which holds them, so as to perform in each instance the cuts in the required directions and in succession to provide an overall cut of the required extent. Even in this case, however, the need to provide a supporting structure which is independent and raised with respect to the plate supporting surface is evident, and said structure must at the same time have characteristics of high rigidity and stability to ensure the considerable reliability and durability of the machine.

Furthermore, a plurality of hydraulic cylinders is usually provided to operate machines of this type; one end of said cylinders is connected to a fixed point of the supporting structure of the machine and the other end interacts with a slider which supports a tool-holder blade; said slider is movable along vertical guides which are rigidly associated with said supporting structure.

These known hydraulic actuation devices are characterized by a certain slowness in operation due to the inertia of the considerable masses involved, with a consequent limited productivity of the machine tools on which said devices are installed.

Several attempts have been made to increase the translational speed of the tool-holder blade, some of which essentially use mechanical devices which are for example constituted by a crank which is driven by a motor shaft and is connected to the blade-holder slider by means of appropriate connecting rod systems. However, though these devices offer the advantage of a higher operating speed, they have the disadvantage of creating high friction on the supports of the crank, with consequent losses of power, overheatings and wear of the parts in contact.

Due to this reason, the hydraulic devices which act directly on the slider are currently considered more advantageous with respect to mechanical ones in terms of required power and limited maintenance.

The aim of the present invention is to provide an angle shearing machine which despite its small size and considerable constructive simplicity allows to perform right-angle cuts in which one of the dimensions is fixed and preferably at least equal to the maximum width of commercially available plates, and in which the other dimension is variable at will.

Within the scope of this aim, a particular object of the invention is to provide an angle shearing machine having a supporting structure which is similar to a conventional straight shearing machine and allows to easily handle and move the plates relatively to the cutting blades without interfering with the supporting structure of the machine itself.

A further object of the present invention is to provide an angle shearing machine which allows to selectively perform linear cuts of any length or angle cuts of a selected width, so as to obtain pieces of plate of different sizes.

Still a further object of the present invention is to provide a machine having high speeds of translational motion and of motion reversal of the tool-holder blade, so as to increase the machine's efficiency and productivity.

A further object is to provide a hydraulic actuation device which has modest dimensions and weight, so as to reduce the inertia of the moving elements.

Another object of the present invention is to provide a hydraulic actuation device which uses the smallest possible number of hydraulic cylinders in order to reduce the adjusting operations and maintenance on these important elements.

Not a least object is to provide a constructively very simple angle shearing machine so as to have high reliability, long life and reduced maintenance.

This aim, this object and others which will become apparent hereinafter are achieved by an angle shearing machine of the type described in the precharacterizing part of the description, in accordance with the characterizing part of claim 1.

Further characteristics and advantages of the invention will become apparent from the description of a preferred but not exclusive embodiment of the angle shearing machine according to the invention, illustrated only by way of non-limitative example in the accompanying drawings, wherein:
Fig. 1 is a partially sectional front view of an angle shearing machine according to the invention;
Fig. 2 is a partially sectional side view of the angle shearing machine illustrated in Fig. 1;
Fig. 3 is a sectional view of a detail of Fig. 2 taken along a vertical plane indicated by III-III;
Fig. 4 is a sectional view of a detail of Fig. 2 taken along a vertical plane indicated by IV-IV.
Fig. 5 is an horizontal sectional view of a detail of the machine;
Fig. 6 is a view similar to Fig. 1 of the machine according to the invention, showing the device for actuating the tool-holder blades;
Fig. 7 is a partially sectional side view of the angle shearing machine illustrated in Fig. 5.

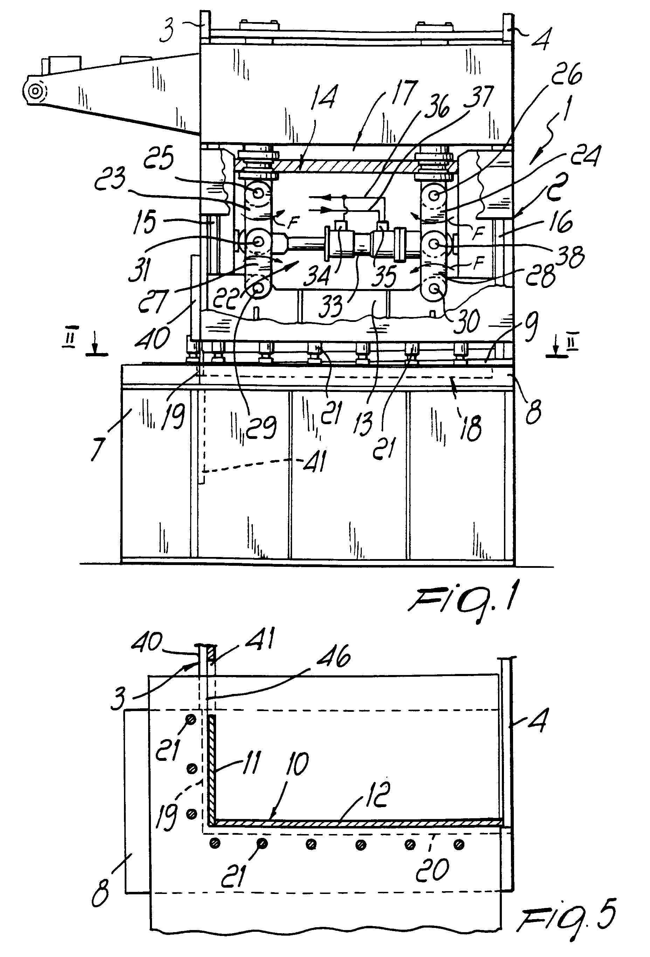

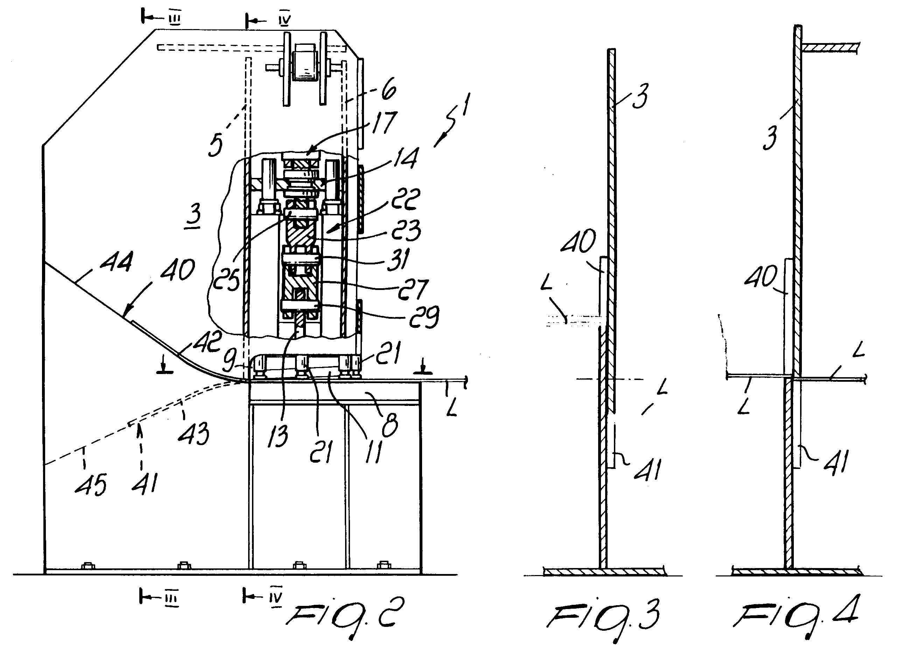

With reference to Figs. 1-5, the angle shearing machine according to the invention, which is generally indicated by the reference numeral 1 and may be associated with a metal plate manipulator which is not illustrated in the drawings, comprises a supporting structure 2 which is formed by two transverse lateral shoulders 3, 4 made of steel plates of considerable thickness, for example comprised between 30 and 40 mm, which are longitudinally spaced and are mutually connected by longitudinal plates 5, 6 and by a lower platform 7 which supports a plate support table 8.

The lateral shoulders 3, 4 are approximately C-shaped with substantially horizontal recesses which are defined along the front edge and are suitable for defining, above the support table 8, a front compartment 9 for the passage and insertion of a plate L to be cut, the maximum thickness thereof is equal to approximately 2 mm, in a manner which will be described in greater detail hereinafter. The compartment 9 preferably has a longitudinal dimension which slightly exceeds 1400 mm, to allow the complete insertion of commercially available plates having this maximum width, and a transverse dimension which slightly exceeds 500 mm.

The shearing machine comprises an angled cutting blade 10 which is composed respectively of a transverse portion 11 and of a longitudinal portion 12 which are rigidly associated with a blade-holder cross-member 13. Said beam is in turn connected to an upper slider 14 which can oscillate vertically along lateral guides 15, 16 and is actuated by an actuation device generally indicated by the reference numeral 17.

The blade portions 11, 12 are arranged substantially at right angles and their dimensions are slightly smaller than those of the compartment 9 in the corresponding directions. Conveniently, the plate support table 8 is centrally provided with a cavity suitable for receiving the blade 10 during its descent stroke as well as a counter-blade 18 formed by segments 19, 20 intended to cooperate with the respective segments 11 and 12 to cut the plate L.

Advantageously, the blade portions 11, 12 are slightly inclined with respect to a horizontal plane and are mutually vertically offset, with the transverse portion 11 lower than the longitudinal portion 12. The consequence of this arrangement is that during the descent of the slider 14 the blade 10 acts on the plate L with its transverse portion for a first part of the stroke and with its longitudinal portion for a second part of said descent stroke. Elastic pressers 21 are furthermore provided and are rigidly associated with the blade 10 and arranged peripherally thereto so as to stably retain the plate during the cutting step.

Conveniently, according to the invention, there is an expandable device for controllably varying the relative distance between the slider 14 and the blade-holder cross-member 13, so as to controllably select the lower stroke limit position of the blade 10 with respect to the plate support table, so as to move said blade to engage the plate exclusively with its transverse portion 11 or with both portions 11 and 12.

More particularly, said expandable device, generally indicated by the reference numeral 22, comprises a first pair of upper connecting rods 23, 24 which are hinged respectively at 25, 26 to the slider 14 and a second pair of lower connecting rods 27, 28 which are respectively connected at 29, 30 to the blade-holder cross-member 13. The connecting rods 23, 27 and 24, 28 are in turn respectively articulated at the end points 31, 32 of a double-action hydraulic cylinder 33. Said cylinder has valve means 34, 35 which are connected by means of respective delivery lines 36, 37 to a hydraulic control unit, which is not illustrated in the drawings. In figure 1, the pairs of connecting rods of the device are shown in a condition of initial alignment, which corresponds to the maximum expansion of the device and to the maximum distance between the slider 14 and the cross-member 13. By operating the hydraulic cylinder 33 so as to make its ends 31, 32 move mutually closer, the connecting rods of the device are caused to rotate toward the center, along the direction indicated by the arrows F, thus producing the vertical shortening of the device and the consequent approach of the slider 14 to the cross-member 13. Conveniently, according to the invention, there is a pair of fixed guiding surfaces which are suitable for vertically pulling apart the adjacent flaps of a cut produced in the plate L by the transverse portion 11 of the blade 10, as a consequence and as an effect of the advancement of the plate parallel to said transverse cut.

In particular, the transverse shoulder 3 is arranged substantially aligned with the transverse portion 11 of the blade and is provided, behind the recess which defines the compartment 9, with a pair of surfaces 40, 41 which extend on opposite sides with respect to a vertical plane defined by the cutting edge of the blade portion 11.

The surfaces 40, 41 preferably but not necessarily have substantially horizontal generatrices and have a common origin in a point which is immediately adjacent to the innermost end of the transverse portion 11 of the blade. The divergent profiles of the surfaces 40, 41 can be constituted by initial curvilinear portions 42, 43 with an appropriate curvature, blended with rectilinear and inclined end portions 44, 45.

By means of this arrangement, and because of the substantial flexibility of the relatively thin plate, the adjacent flaps of a transverse cut 46, are bent respectively upward and downward, when the plate L is caused to advance parallel to said transverse cut 46 to perform subsequent cuts in the same direction.

The guiding surfaces 40, 41 can be constituted by grooves milled in the opposite walls of a single high-thickness plate or can be constituted by the profiled edges of two plates which are partially superimposed and coupled so as to define, as a whole, the vertical shoulder 3. Fig. 3 and 4 clearly illustrate two cross sections of the shoulder 3 along longitudinal vertical planes which clearly show the position of the plate L after an advancement in a transverse direction which is equal in length to the extent of a transverse cut (46).

From what has been described above the operation of the angle shearing machine according to the invention is apparent.

A plate to be cut, with a thickness of approximately 2 mm, is initially inserted and positioned in the compartment 9, then the cutting blade 10 is actuated so as to impart thereto a first part of its total stroke, performing a cut with only the transverse portion 11. During this step, the expandable device 22 is in its contracted position, which is reached as a consequence of the rotation of the connecting rods along the direction of the arrow F, so that the slider 13 and the blade-holder cross-member 14 are at their minimum relative distance and only the portion 11 can engage the plate to perform a cut 46. The blade 10 is subsequently raised and the plate L is caused to advance parallel to the transverse cut 46, so as to expose an adjacent region of the plate, in order to perform a second cut which is aligned with the preceding one 46, and so on until a transverse cut of required length is obtained. During this second step, the adjacent edges of the cut are caused to slide on the surfaces 40, 41, forcing the flaps of the cut 46 to separate respectively upward and downward so as to allow the further advancement of the plate inside the compartment 9 without interfering with the supporting structure of the machine.

After performing a transverse cut of the required length it is possible to proceed with the third final step of the cut. For this purpose, the expandable device 22 is moved to its condition of maximum dilation, causing the slider 14 to be spaced apart from the blade-holder cross-member 13. In this condition, the blade 10 engages the plate L with both portions 11, 12 so as to complete the transverse cut with a longitudinal cut, causing the separation of the piece of plate of the required dimensions, in particular with a much larger transverse dimension than the actual dimension of the blade which generated it.

It has been observed in practice that the shearing machine according to the invention fully achieves the intended aim, having a small size and at the same time being adapted to cut plates into pieces of any transverse dimension and with longitudinal dimensions which substantially correspond to the maximum commercially available ones.

This result is obtained by means of a shearing machine which has an extremely compact supporting structure, particularly with transverse dimensions which are reduced with respect to the cutting length in the same direction and are comparable with those of conventional straight shearing machines, without requiring huge post-and-lintel structures or large moving masses.

The angle shearing machine thus conceived is susceptible to numerous modifications and variations, all of which are within the scope of the invention as claimed in the appendant claims;

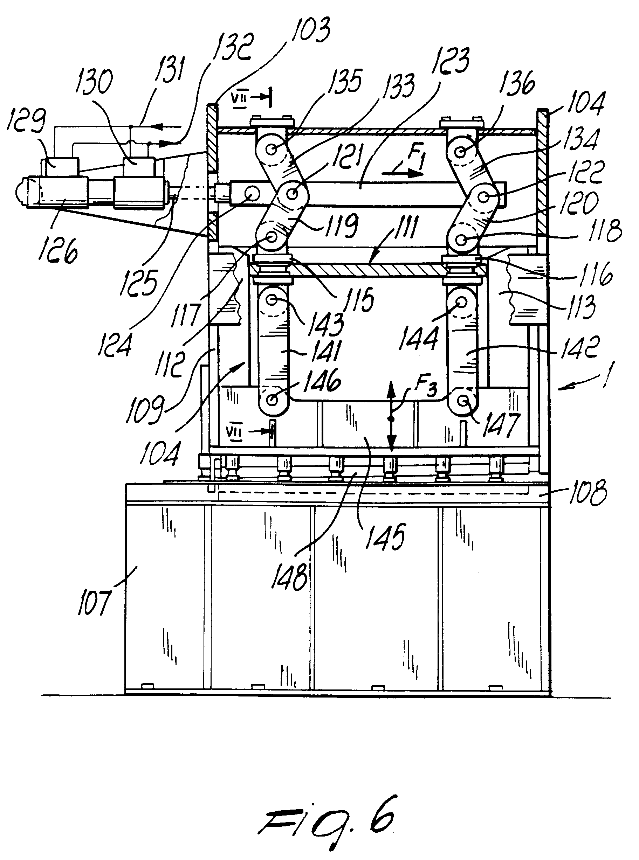

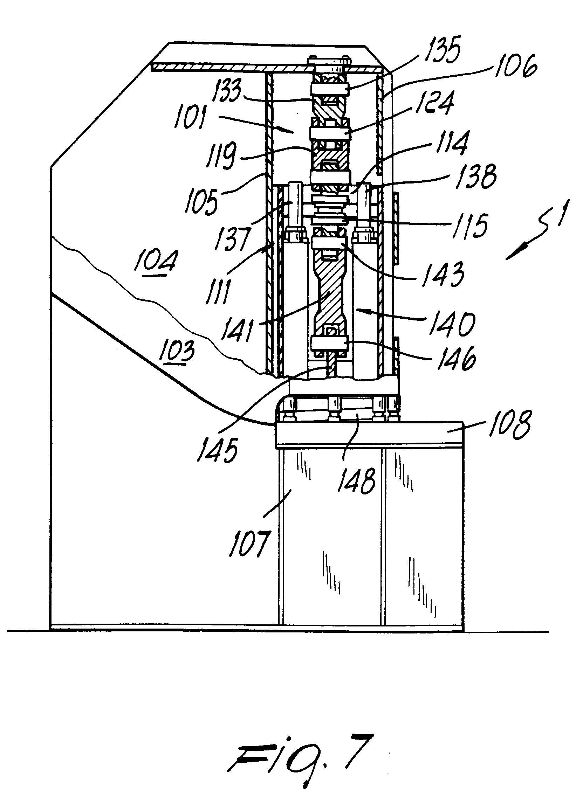

Figs. 6-7, for example, illustrate an actuator device for actuating the tool-holder blades, generally indicated by the reference numeral 101, mounted, on the shearing machine 1 for cutting planar plates L. The supporting structure of the shearing machine 102 comprises a pair of lateral stiffening shoulders 103, 104 which are mutually connected by longitudinal plates 105, 106 and by a lower platform 7 which supports a plate support table 108.

Vertical guides 109, 110 are fixed on the inner walls of the lateral shoulders 103, 104, and a blade-holder slider, generally indicated by the reference numeral 111, can slide along said guides. The slider 111 essentially consists of a pair of lateral skids 112, 113 which are connected upward by a horizontal cross-member 114. The cross-member 114 accommodates the supports 115, 116, each of which has a pair of respectively upper and lower hinges.

Conveniently, according to the invention, articulated connecting means are coupled to the upper hinges 117, 118 of the supports 115, 116 and comprise a first pair of lower connecting rods 119, 120 which are pivoted with their upper ends 121, 122 to the horizontal rod 123. Said horizontal rod is in turn articulated at 124 to the free end of the movable stem 125 of a hydraulic cylinder 126 which has a substantially horizontal axis and is of a per se known type which comprises automatic stroke-limit dampers.

The fixed jacket of the hydraulic cylinder 126 is rigidly associated with the supporting structure 1 by means of an articulated support 127 which is arranged at the free end of a member 128 which in turn protrudes from the outer wall of the shoulder 103. Valve means 129, 130 are associated with the cylinder 126 and have the function of controlling the reversal of the back-and-forth motion of the stem 125 and indeed of damping the motion of the stem proximate to the stroke limit points. Hydraulic fluid delivery and return pipes 131, 132 are connected to the valves 129, 130 and are respectively also connected to a control unit which is not illustrated in the drawings. It is noted that this arrangement allows the use of a single hydraulic cylinder arranged laterally to the supporting structure, in a position which can be easily accessed by an operator for inspection.

The lower connecting rods 119, 120 and the upper connecting rods 133, 134 are articulated, respectively at one side and at the other, at the pivoting points 121, 122 of the rod 123 and are arranged symmetrically and transversely with respect to the rod 123. The upper connecting rods 133, 134 furthermore have upper ends which are hinged to the supporting structure respectively at the hinge points 135, 136. In order to ensure perfect regularity and verticality in the translational motion of the slider 111, the cross-member 114 preferably has bush-fitted guiding holes which slidably accommodate vertical columns 137, 138 which are rigidly associated with the supporting structure of the machine.

Since the hinge points 135, 136 are in a fixed position with respect to the supporting structure, the above described arrangement of the articulated connecting means is such that a horizontal one-way stroke of the stem 125 of the power cylinder 126, for example in the direction of the arrow F₁, imparts a two-way vertical ascending and descending stroke of the slider 111, schematically indicated by the arrows F₂ and F in Fig. 6, with an average translational speed which is approximately double that of the cylinder.

The cutting tool of the shearing machine is coupled to the slider 111 by means of an intermediate connecting structure generally indicated by the reference numeral 140. Said intermediate structure 140 can be constituted for example by a pair of struts 141, 142 which are connected upward to the supports 114, 115 respectively at the hinge points 143, 144 and downward to a tool-holder member 145 at the pivoting points 146, 147; a cutting blade 148 with an inclined cutting edge is anchored to the member 145.

From what has been described above the operation of the device according to the invention is apparent.

In order to produce a descending and ascending stroke of the blade 148 it is sufficient to actuate the hydraulic cylinder 126 so as to produce a translational motion of the movable stem 125 from the extreme rightward position to the extreme leftward position indicated in broken lines in Fig. 6. By actuating the hydraulic cylinder in the opposite direction, i.e. from left to right, a further descending stroke and an ascending stroke of the blade 148 are obtained. Since a one-way stroke of the cylinder 126 is sufficient to produce the ascending and descending stroke of the blade, this necessarily implies that the device according to the invention has a greater speed with respect to those of the prior art for equal dynamic characteristics of the hydraulic power cylinder.

The device according to the invention provides for a translational motion speed and motion reversal speed of the tool-holder blade, which are considerably higher than those of the prior art. The device according to the invention furthermore allows to use power transmission means which have reduced dimensions and masses and requires only one hydraulic cylinder, with evident advantages in adjustment and maintenance.

The materials employed, as well as the dimensions, may be any according to the specific needs and the state of the art.

When technical features mentioned in any claim are followed by reference signs, those reference signs have been included for the sole purpose of increasing the intelligibility of the claims and accordingly, such reference signs do not have any limiting eject on-he scope of each element identified by way of example by such reference signs.

## Claims

1. Angle shearing machine, particularly for cutting metal plates into pieces of different sizes, comprising a supporting structure (2) with a front longitudinal compartment (9) for the placement of a plate (L) to be cut and a cutting blade (10) adapted for vertical oscillation above said compartment, said blade (10) having a transverse portion (11) and a longitudinal portion (12) which substantially form a right angle therebetween and are suitable for selectively interacting with the plate to be cut in order to perform a transverse cut (46) during a first portion of the descent stroke and a longitudinal cut during a second portion of said descent stroke, characterized in that said supporting structure (2) includes at least one vertical shoulder (3) which is aligned with said transverse blade portion (11), a pair of fixed guiding surfaces (40, 41) being arranged on opposite sides of said vertical shoulder (3) with respect to a vertical plane tangent to the cutting edge of said tranverse blade portion (11) for vertically pulling apart the adjacent flaps of a transverse cut (46) upon the advancement of the plate (L) parallel thereto.

2. Angle shearing machine according to claim 1, wherein said pair of guiding surfaces (40, 41) is rigidly associated with said supporting structure (2) and extends from the inner edge of said front compartment (9) toward the rear edge of said structure (2).

3. Angle shearing machine according to one or more of the preceding claims, wherein said guiding surfaces (40, 41) are formed on the lateral faces of said shoulder (3) which is aligned with said transverse blade (11).

4. Angle shearing machine according to one or more of the preceding claims, wherein said supporting structure includes at least another lateral shoulder (4) which is substantially parallel to said one lateral shoulder which is aligned with said transverse blade portion (11), said lateral shoulders (3, 4) being arranged at the longitudinal ends of said compartment (9).

5. Angle shearing machine according to one or more of the preceding claims, wherein said lateral shoulders (3, 4) are approximately C-shaped and are rigidly connected by longitudinal walls (5, 6) as well as by a plate support table (8) which is substantially horizontal and tangent to said compartment (9).

6. Angle shearing machine according to one or more of the preceding claims, characterized in that said surfaces (40, 41) have profiles which are approximately symmetrical with respect to the resting plane of the plate, with initial curvilinear portions (42, 43) having a common origin, blended with rectilinear and inclined final portions (44, 45) which extend to the rear edge of said shoulder (3).

7. Angle shearing machine according to one or more of the preceding claims, characterized in that said guiding surfaces (40, 41) are constituted by profiled grooves defined by milling on the opposite faces of a high-thickness plate which defines said shoulder (3) which is aligned with said transverse blade (11).

8. Angle shearing machine according to one or more of the preceding claims, characterized in that said guiding surfaces (15, 16) are constituted by the respectively upper and lower edges of two plates which are partially superimposed and rigidly coupled so as to define said shoulder (3) which is aligned with said transverse blade (11).

9. Angle shearing machine according to one or more of the preceding claims, characterized in that said compartment (9) has a longitudinal dimension which is preferably slightly greater than 1400 mm and a transverse dimension which is preferably slightly greater than 500 mm.

10. Angle shearing machine according to one or more of the preceding claims, characterized in that said blade (10) is connected to an actuation device (17) by means of an upper slider (14) which is vertically movable along guides (15, 16) which are rigidly associated with said supporting structure (2), said slider (13) being in turn connected to said blade (10) by means of a blade-holder cross-member (13).

11. Angle shearing machine according to one or more of the preceding claims, characterized in that it has an expandable device (22) which is interposed between said slider (14) and said blade-holder cross-member (14) and has a selectively variable height.

12. Angle shearing machine according to one or more of the preceding claims, characterized in that said expandable device (22) is pivoted upward to said slider (14) and downward to said blade-holder cross-member (13) and comprises a first pair of substantially vertical upper connecting rods (23, 24) which are pivoted to a second pair of lower connecting rods (27, 28) which are also substantially vertical, said pairs of connecting rods being pivoted on the opposite sides and to the ends (31, 31) of a substantially horizontal double-action hydraulic cylinder (33) so that the contraction of said cylinder (33) causes the rotation of said connecting rods toward the inside of said device (22) and the approach of the corresponding points of pivoting to said slider and to said cross-member.

13. Angle shearing machine according to one or more of the preceding claims, characterized in that said hydraulic cylinder (33) of said expandable device (17) has valve means (35, 36) which are connected by means of delivery and return lines (37, 38) to an external hydraulic control unit.

14. Angle shearing machine (1) according to claim 1, comprising a slider (111) which supports a tool-holder blade (145), guiding means (111, 112) which are rigidly anchored to a supporting structure in order to slidably guide said slider in its vertical ascending and descending motion, a double-action hydraulic cylinder (126) which interacts with said slider (111) for the movement of said blade (145), characterized in that said first hydraulic cylinder is hinged with one fixed end (127) to a point of said supporting structure and with the other movable end (125) to said slider (111) by means of articulated connecting means which are suitable for converting a one-way stroke of said cylinder (126) into a two-way stroke of said slider (111).

15. Angle shearing machine according to claim 14, characterized in that the axis of said first hydraulic cylinder (126) is substantially horizontal and perpendicular to said guiding means (111, 112).

16. Angle shearing machine according to one or more of the preceding claims, characterized in that said articulated connecting means comprise a rod (123) which is substantially aligned with said first hydraulic cylinder (126) and is hinged to one end (124) thereof, at least one, preferably two upper connecting rods (133, 134) being articulated to said rod on one side, at least one, preferably two lower connecting rods being articulated to said rod on the other side, said upper connecting rods and said lower connecting rods being coupled in pairs in spaced points (121, 122) of said rod (123).

17. Angle shearing machine according to one or more of the preceding claims, characterized in that the ends of said upper connecting rods (133, 134) which are furthest from said rod (123) are furthermore articulated to said supporting structure in fixed hinge points (135, 136).

18. Angle shearing machine according to one or more of the preceding claims, characterized in that the ends of said lower connecting rods (119, 120) which are furthest from said rod are connected to said slider (111) in corresponding pivoting points (117, 118).

19. Angle shearing machine according to one or more of the preceding claims, characterized in that said slider (111) is connected to said blade-holder cross-member (145) by means of an intermediate connecting structure (140).

20. Angle shearing machine according to one or more of the preceding claims, characterized in that said intermediate connecting structure comprises at least one pair of vertical struts (141, 142) which are connected in an upward position to lower hinge points (142, 143) of said supports (114, 115) and in a downward position to corresponding points (146, 147) of said blade-holder cross-member (145) which in turn supports a tool (148).

21. Angle shearing machine according to one or more of the preceding claims, characterized in that said hydraulic cylinder (126) is of the double-action type, valve means (130, 132) being associated with said cylinder and being suitable for controlling the translational motion of the movable stem (125) of said cylinder (126) and to damp its motion proximate to the stroke limit points.

## Patentansprüche

1. Winkelschneidemaschine, insbesondere zum Schneiden von Metallblechen in Stücke unterschiedlicher Größe, enthaltend einen tragenden Aufbau (2) mit einem vorderen, länglichen Bereich (9) für die Ablage eines zu schneidenden Bleches (L) und ein Schneidmesser (10), das für eine vertikale Schwingungsbewegung über diesem Bereich geeignet ist, wobei dieses Schneidmesser (10) einen quer verlaufenden Abschnitt (11) und einen längs verlaufenden Abschnitt (12) hat, die zwischen sich im wesentlichen einen rechten Winkel bilden und geeignet sind, selektiv auf das zu schneidende Blech einzuwirken, um während eines ersten Abschnitts des Abwärtshubes einen querverlaufenden Schnitt (46) und während eines zweiten Abschnitts des Abwärtshubes einen längs verlaufenden Schnitt durchzuführen, dadurch gekennzeichnet, daß der tragende Aufbau (2) mindestens einen vertikalen Ansatz (3) enthält, der mit dem Abschnitt (11) des quer verlaufenden Schneidmessers ausgerichtet ist, wobei zwei feststehende Führungsflächen (40,41) auf entgegengesetzten Seiten des vertikalen Ansatzes (3) bezüglich einer senkechten Ebene tangential zur Schnittkante des quer verlaufenden Schneidmesserabschnitts angeordnet sind, um die benachbarten Lappen eines quer verlaufenden Schnittes (46) während der parallel dazu verlaufenden Vorwärtsbewegung des Blechs (L) vertikal auseinander zu ziehen.

2. Winkelschneidemachine gemäß Anspruch 1, wobei das Paar von Führungsflächen (40,41) starr mit dem tragenden Aufbau (2) verbunden ist und sich von dem inneren Rand des vorderen Bereichs (9) zum hinteren Rand des Aufbaus (2) hin erstreckt.

3. Winkelschneidemaschine gemäß einem oder mehreren der vorstehenden Ansprüche, wobei die Führungsflächen (40,41) auf den Seitenflächen des Ansatzes (3) ausgebildet sind, der mit dem querverlaufenden Schneidmesser (11) ausgerichtet ist.

4. Winkelschneidemaschine gemäß einem oder mehreren der vorstehenden Ansprüche, wobei der tragende Aufbau mindestens noch einen anderen seitlichen Ansatz (4) aufweist, der im wesentlichen parallel zu dem seitlichen Ansatz ist, der mit dem Abschnitt (11) des quer verlaufenden Schneidmessers ausgerichtet ist, und wobei die seitlichen Ansätze (3,4) an den in Längsrichtung befindlichen Enden des Bereiches (9) angeordnet sind.

5. Winkelschneidemaschine gemäß einem oder mehreren der vorstehenden Ansprüche, wobei die seitlichen Ansätze (3,4) in etwa die Form eines C besitzen und starr durch in Längsrichtung verlaufende Wände (5,6) und auch durch einen Blechauflagetisch (8) verbunden sind, der im wesentlichen horizontal und tangential zu dem Bereich (9) ist.

6. Winkelschneidemaschine gemäß einem oder mehreren der vorstehenden Ansprüche, dadurch gekennzeichnet, daß die Flächen (40,41) Profile besitzen, die in etwa symmetrisch zur Auflagefläche des Bleches sind und anfangs gekrümmte, einen gemeinsamen Ursprung aufweisende Abschnitte (42,43) haben, die in geradlinige und geneigte Endabschnitte (44,45) übergehen, die sich bis zum hinteren Rand des Ansatzes (3) erstrecken.

7. Winkelschneidemaschine gemäß einem oder mehreren der vorstehenden Ansprüche, dadurch gekennzeichnet, daß die Führungsflächen (40,41) durch profilierte Nuten ausgebildet sind, die durch Fräsen auf den entgegengesetzten Seiten eines Blechs großer Dicke gebildet sind, das den Ansatz (3) bildet, der mit dem quer verlaufenden Schneidmesser (11) ausgerichtet ist.

8. Winkelschneidemaschine gemäß einem oder mehreren der vorstehenden Ansprüche, dadurch gekennzeichnet, daß die Führungsflächen (15,16) durch die entsprechenden oberen bzw. unteren Ränder zweier Bleche gebildet sind, die teilweise übereinander liegen und starr miteinander verbunden sind, so daß sie den Ansatz (3) bilden, der mit dem quer verlaufenden Schnittmessern (11) ausgerichtet ist.

9. Winkelschneidemaschine gemäß einem oder mehreren der vorstehenden Ansprüche, dadurch gekennzeichnet, daß der Bereich (9) eine Längsausdehnung, die vorzugsweise etwas größer als 1400 mm ist, und eine Querausdehnung besitzt, die vorzugsweise etwas großer ist als 500 mm.

10. Winkelschneidemaschine gemäß einem oder mehreren der vorstehenden Ansprüche, dadurch gekennzeichnet, daß das Schneidmesser (10) durch einen oberen Schieber (14) mit einer Betätigungsvorrichtung (17) verbunden ist, wobei der Schieber entlang von Führungen (15,16), die starr mit dem tragenden Aufbau (2) verbunden sind, vertikal beweglich ist, und wobei der Schieber (13) seinerseits mit dem Schneidmesser (10) durch einen das Schneidmesser haltenden Querträger (13) verbunden ist.

11. Winkelschneidemaschine gemäß einem oder mehreren der vorstehenden Ansprüche, dadurch gekennzeichnet, daß sie eine Spreizvorrichtung (22) besitzt, die zwischen dem Schieber (14) und dem das Schneidmesser haltenden Querträger (13) angeordnet ist und eine selektiv veränderbare Höhe besitzt.

12. Winkelschneidemaschine gemäß einem oder mehreren der vorstehenden Ansprüche, dadurch gekennzeichnet, daß die Spreizvorrichtung nach oben an dem Schieber (14) und nach unten an dem das Schneidmesser haltenden Querträger (13) angelenkt ist und ein erstes Paar von im wesentlichen vertikalen, oberen Verbindungsstangen (23,24) enthält, das an einem zweiten Paar von unteren Verbindungsstangen (27,28) angelenkt ist, die im wesentlichen auch vertikal sind, wobei die Verbindungsstangenpaare an den entgegengesetzten Seiten und an den Enden (31,31) eines im wesentlichen horizontalen, doppelt wirkenden Hydraulikzylinders (33) angelenkt sind, so daß eine Kontraktion des Zylinders (33) eine Drehung der Verbindungsstangen in Richtung auf das Innere der Vorrichtung (22) und eine Annäherung der entsprechenden Anlenkpunkte an den Schieber und den Querträger bewirkt.

13. Winkelschneidemaschine gemäß einem oder mehreren der vorstehenden Ansprüche, dadurch gekennzeichnet, daß der Hydraulikzylinder (33) der Spreizvorrichtung (17) Ventilmittel (35,36) besitzt, die durch Vor- und Rücklaufleitungen (37,38) mit einer externen hydraulischen Steuereinheit verbunden sind.

14. Winkelschneidemaschine (1) gemäß Anspruch 1, enthaltend einen Schieber (111), der einen Schneidmesserhalter (145) trägt, Führungsmittel (111, 112), die starr mit einem tragenden Aufbau verankert sind, um den Schieber in seiner vertikal auf- und absteigenden Bewegung gleitend zu führen, und einen doppelt wirkenden Hydraulikzylinder (126), der auf den Schieber (111) für die Bewegung des Schneidmesserhalters (145) einwirkt, dadurch gekennzeichnet, daß der erste Hydraulikzylinder mit einem unbeweglichen Ende (127) an einem Punkt des tragenden Aufbaus aufgehängt ist und mit dem anderen beweglichen Ende (125) an den Schieber (111) durch gelenkige Verbindungsmittel angelenkt ist, die dazu geeignet sind, einen Einweghub des Zylinders (126) in einen Zweiweghub des Schiebers (111) umzuwandeln.

15. Winkelschneidemaschine gemäß Anspruch 14, dadurch gekennzeichnet, daß die Achse des ersten Hydraulikzylinders (126) im wesentlichen horizontal und senkrecht zu den Führungsmitteln (112, 113) ist.

16. Winkelschneidemaschine gemäß einem oder mehreren der vorstehenden Ansprüche, dadurch gekennzeichnet, daß die gelenkigen Verbindungsmittel eine Stange (123), die im wesentlichen mit dem ersten Hydraulikzylinder (126) ausgerichtet und an einem Ende (124) von diesem aufgehängt ist, mindestens eine, vorzugsweise zwei obere Verbindungsstangen (133,134), die an einer Seite der Stange gelenkig angebracht sind, und mindestens eine, vorzugsweise zwei untere Verbindungsstangen enthalten, die gelenkig auf der anderen Seite der Stange angebracht sind, wobei die oberen und die unteren Verbindungsstangen paarweise an beabstandeten Punkten (121,122) der Stange (123) angekoppelt sind.

17. Winkelschneidemaschine gemäß einem oder mehreren der vorstehenden Ansprüche, dadurch gekennzeichnet, daß diejenigen Enden der oberen Verbindungsstangen (133,134), die am weitesten von der Stange (123) entfernt sind, darüber hinaus an unbeweglichen Gelenkpunkten (135,136) an den tragenden Aufbau angelenkt sind.

18. Winkelschneidemaschine gemäß einem oder mehrere der vorstehenden Ansprüche, dadurch gekennzeichnet, daß diejenigen Enden der unteren Verbindungsstangen (119,120), die am weitesten von der Stange entfernt sind, mit dem Schieber (111) an entsprechenden Drehpunkten (117,118) verbunden sind.

19. Winkelschneidemaschine gemäß einem oder mehreren der vorstehenden Ansprüche, dadurch gekennzeichnet, daß der Schieber (111) mit dem Schneidmesserhalter (145) durch einen dazwischen liegenden verbindenden Aufbau (140) verbunden ist.

20. Winkelschneidemaschine gemäß einem oder mehreren der vorstehenden Ansprüche, dadurch gekennzeichnet, daß der dazwischen liegende, verbindende Aufbau wenigstens ein Paar von vertikalen Verstrebungen (141,142) enthält, die in einer oberen Position mit unteren Gelenkpunkten (142,143) der Träger (114,115) und in einer unteren Position mit entsprechenden Punkten (146,147) des Schneidmesserhalters (145) verbunden sind, der seinerseits ein Werkzeug (148) trägt.

21. Winkelschneidemaschine gemäß einem oder mehreren der vorstehenden Ansprüche, dadurch gekennzeichnet, daß der Hydraulikzylinder (126) von doppelt wirkender Art ist und dem Zylinder Ventilmittel (130,132) zugeordnet sind, die geeignet sind, die Schiebung des beweglichen Kolbens (125) des Zylinders (126) zu steuern und seine Bewegung nahe der Totpunkte des Hubs zu dämpfen.

## Revendications

1. Machine de coupe angulaire destinée en particulier à découper des plaques métalliques en éléments de différents formats, comprenant une structure de support (2) ayant un compartiment longitudinal frontal (9) permettant de mettre en place une plaque (L) à découper, et une lame de coupe (10) adaptée pour osciller verticalement au-dessus dudit compartiment, ladite lame (10) comprenant une partie transversale (11) et une partie longitudinale (12), qui forment essentiellement un angle droit entre elles et sont adaptées pour interagir de façon sélective avec la plaque à découper, de manière à effectuer une coupe transversale (46) pendant une première phase de la course descendante, et une coupe longitudinale pendant une seconde phase de la course descendante,
caractérisée en ce que ladite structure de support (2) inclut au moins un col de cygne vertical (3) qui est aligné sur ladite partie transversale (11) de la lame, une paire de surfaces de guidage fixes (40, 41) étant agencée aux côtés opposés dudit col de cygne vertical (3), par rapport à un plan vertical tangent au bord de coupe de ladite partie transversale (11) de la lame, afin d'écarter verticalement les pans adjacents d'une ligne de coupe transversale (46) lors de l'avancement de la plaque (L) parallèlement à celle-ci.

2. Machine de coupe selon la revendication 1, dans laquelle ladite paire de surfaces de guidage (40, 41) est rigidement associée à ladite structure de support (2) et s'étend depuis le bord intérieur dudit compartiment frontal (9) vers le bord arrière de ladite structure (2).

3. Machine de coupe selon une ou plusieurs des revendications précédentes, dans laquelle lesdites surfaces de guidage (40, 41) sont prévues sur les faces latérales dudit col de cygne (3), qui est aligné sur ladite lame (11).

4. Machine de coupe selon l'une ou plusieurs des revendications précédentes, dans laquelle ladite structure de support inclut au moins un autre col de cygne latéral (4), qui est essentiellement parallèle au premier, qui est aligné sur ladite partie transversale (11) de la lame, lesdits cols de cygne latéraux (3, 4) étant agencés aux extrémités longitudinales dudit compartiment (9).

5. Machine de coupe selon l'une ou plusieurs des revendications précédentes, dans laquelle lesdits cols de cygne latéraux (3, 4) sont configurés à peu près en forme de C et sont rigidement interconnectés par l'intermédiaire de parois longitudinales (5, 6) ainsi que par l'intermédiaire d'une table (8) de support de plaque, qui est essentiellement horizontale et tangente audit compartiment (9).

6. Machine de coupe selon l'une ou plusieurs des revendications précédentes, caractérisée en ce que lesdites surfaces (40, 41) présentent des profils qui sont à peu près symétriques par rapport au plan de pose de la plaque, des parties initiales curvilignes (42, 43) ayant le même point de départ et étant conjuguées avec des parties terminales rectilignes et inclinées (44, 45), qui s'étendent vers le bord arrière dudit col de cygne (3)

7. Machine de coupe selon l'une ou plusieurs des revendications précédentes, caractérisée en ce que lesdites surfaces de guidage (40, 41) sont constituées par des rainures définies par fraisage des faces opposées d'une plaque de forte épaisseur, qui définit ledit col de cygne (3), aligné sur ladite lame transversale (11).

8. Machine de coupe selon l'une ou plusieurs des revendications précédentes, caractérisée en ce que lesdites surfaces de guidage (15, 16) sont constituées par les bords respectivement supérieur et inférieur de deux plaques partiellement superposées et rigidement couplées l'une à l'outre de manière à définir ledit col de cygne (3), qui est aligné sur ladite lame transversale (11).

9. Machine de coupe selon l'une ou plusieurs des revendications précédentes, caractérisée en ce que ledit compartiment (9) présente une dimension longitudinale, qui est de préférence légèrement supérieure à 1400 mm, et une dimension transversale qui est de préférence légèrement supérieure à 500 mm.

10. Machine de coupe selon l'une ou plusieurs des revendications précédentes, caractérisée en ce que ladite lame (10) est reliée à un dispositif actionneur (17) par l'intermédiaire d'un coulisseau supérieur (14) qui est verticalement mobile le long des guides (15, 16) rigidement associés à ladite structure de support (2), ledit coulisseau (14) étant à son tour relié à ladite lame (10) au moyen d'un élément transversal porte-lame (13).

11. Machine de coupe selon l'une ou plusieurs des revendications précédentes, caractérisée en ce qu'elle comporte un dispositif expansible (22), qui est intercalé entre ledit coulisseau (14) et ledit élément transversal porte-lame (14) et présente une hauteur réglable de façon sélective.

12. Machine de coupe selon l'une ou plusieurs des revendications précédentes, caractérisée en ce que ledit dispositif expansible (22) est articulé vers le haut sur ledit coulisseau (14) et vers le bas sur ledit élément transversal porte-lame (13), et comporte une première paire de biellettes supérieures essentiellement verticales (23, 24), qui sont articulées sur une deuxième paire de biellettes inférieures (27, 28), qui sont également essentiellement verticales, lesdites paires de biellettes étant articulées sur les côtés opposés et les extrémités (31, 31) d'un vérin hydraulique (33) à double effet, essentiellement horizontal, de manière que la contraction dudit vérin (33) entraîne la rotation desdites biellettes vers l'intérieur dudit dispositif (22), ainsi que le rapprochement des points d'articulation correspondants par rapport au coulisseau et par rapport à l'élément transversal.

13. Machine de coupe selon l'une ou plusieurs des revendications précédentes, caractérisée en ce que ledit vérin hydraulique (33) dudit dispositif expansible (17) comporte des moyens de soupape (35, 36) raccordés sur un circuit de commande hydraulique externe par l'intermédiaire de conduites d'alimentation et de retour (37, 38).

14. Machine de coupe (1) selon la revendication 1, comprenant un coulisseau (111) qui supporte une lame porte-outil (145), des moyens de guidage (111, 112) rigidement ancrés sur une structure de support de manière à guider de façon coulissante ledit coulisseau dans ses mouvements verticaux ascendant et descendant, un vérin hydraulique (126) à double effet, qui interagit avec ledit coulisseau (111) de manière à produire le mouvement de ladite lame (145),
caractérisée en ce que ledit premier vérin hydraulique est articulé par une extrémité fixe (127) sur un point de ladite structure de support, et par son autre extrémité mobile (125) sur ledit coulisseau (111), par l'intermédiaire de moyens de liaison articulés capables de convertir une course unidirectionnelle dudit vérin (126) en une course bidirectionnelle dudit coulisseau (111).

15. Machine de coupe selon la revendication 14, caracterisée en ce que l'axe dudit premier vérin hydraulique (126) est essentiellement horizontal et perpendiculaire auxdits moyens de guidage (111, 112).

16. Machine de coupe selon l'une ou plusieurs des revendications précédentes, caractérisée en ce que les moyens de liaison articulés comportent une barre (123) qui est essentiellement alignée avec ledit premier vérin hydraulique (126) et est articulée sur une extrémité (124) de celui-ci, au moins une, de préférence deux biellette(s) supérieure(s) (133, 134) étant articulée(s) sur un côté de ladite barre, et au moins une, de préférence deux biellette(s) inférieure(s) étant articulée(s) sur l'autre côté de ladite barre, lesdites biellettes supérieures et lesdites biellettes inférieures étant accouplées par paires, à des points espacés (121, 122) de ladite barre (123).

17. Machine de coupe selon l'une ou plusieurs des revendications précédentes, caractérisée en ce que les extrémités desdites biellettes supérieures (133, 134), qui sont les plus éloignées de ladite barre (123), sont en outre articulées sur ladite structure de support, à des points d'articulation fixes (135, 136).

18. Machine de coupe selon l'une ou plusieurs des revendications précédentes, caractérisée en ce que les extrémités desdites biellettes inférieures (119, 120), qui sont les plus éloignées de ladite barre, sont reliées audit coulisseau (111), à des points d'articulation correspondants (117, 118).

19. Machine de coupe selon l'une ou plusieurs des revendications précédentes, caractérisée en ce que ledit coulisseau (111) est relié à l'élément transversal porte-lame (145) au moyen d'une structure de liaison intermédiaire (140).

20. Machine de coupe salon l'une ou plusieurs des revendications précédentes, caractérisée en ce que ladite structure de liaison intermédiaire comprend au moins une paire de jambes de force verticales (141, 142), qui sont reliées au niveau supérieur aux points d'articulation inférieurs (142, 143) desdits supports (114, 115), et au niveau inférieur aux points correspondants (146, 147) dudit élément transversal porte-lame (145) qui, à son tour, supporte un outil (148).

21. Machine de coupe selon l'une ou plusieurs des revendications précédentes, caractérisée en ce que ledit vérin hydraulique (126) est du type à double effet, des moyens de soupape (130, 132) étant associés audit vérin et étant adaptés pour commander le mouvement en translation de la tige mobile (125) dudit vérin (126), et à amortir son mouvement à proximité des points de fin de course.
